# EUROPÄISCHE PATENTSCHRIFT

(11) **EP 0 872 512 B1**
(45) Veröffentlichungstag und Bekanntmachung des Hinweises auf die Patenterteilung: **09.05.2001**
(21) Anmeldenummer: 98105279.8
(22) Anmeldetag: 24.03.1998
(51) Int. Cl.: C08J 7/18, A61L 29/00, B05D 3/06

(54) **Verfahren zur Modifizierung der Oberfläche von Polymersubstraten durch Pfropfpolymerisation**
Process for modifying the surface of polymeric substrates by graft polymerisation
Procédé pour modifier la surface d'un substrat polymère par polymérisation de greffage

(30) Priorität: 14.04.1997 DE 19715449; 29.07.1997 DE 19732586; 09.12.1997 DE 19754565
(43) Veröffentlichungstag der Anmeldung: 21.10.1998
(73) Patentinhaber: Degussa AG, 40474 Düsseldorf (DE)
(72) Erfinder: Ottersbach, Peter, Dr., 51570 Windeck (DE); Inhester, Martina, 45699 Herten (DE)

(56) Entgegenhaltungen:
- WO-A-97/02313
- GB-A- 1 120 803
- GB-A- 1 601 529
- BENGT RANBY: "SURFACE MODIFICATION OF POLYMERS BY PHOTOINITIATED GRAFT POLYMERIZATION" MAKROMOLEKULARE CHEMIE, MACROMOLECULAR SYMPOSIA, Bd. 63, 1. Oktober 1992 (1992-10-01), Seiten 55-67, XP000324141
- DATABASE WPI Section Ch, Week 199243 Derwent Publications Ltd., London, GB; Class A32, AN 1992-355187 XP002118725 & JP 04 259381 A (NIPPON CHEM IND CO LTD), 14. September 1992 (1992-09-14)

## Beschreibung

Die Erfindung betrifft ein Verfahren zur Modifizierung der Oberfläche von Polymersubstraten durch kontrollierte, mittels elektromagnetischer Strahlung oder thermisch induzierter Pfropfpolymerisation aliphatisch (oder olefinisch) ungesättigter Verbindungen. Die Erfindung betrifft weiterhin die Verwendung der modifizierten Polymersubstrate zur Herstellung von Erzeugnissen sowie die Erzeugnisse als solche.

### 1. Stand der Technik

Die Modifizierung von Kunststoffoberflächen, speziell von technisch genutzen Produkten, ist von großem wirtschaftlichen Interesse. Als technisch und wirtschaftlich bedeutend hat sich in diesem Zusammenhang vor allem die Pfropfpolymerisation aliphatisch ungesättigter Monomerer erwiesen, da hierdurch neue Verwendungsmöglichkeiten für bereits im Markt etablierte Standardkunststoffe gefunden werden können. Durch die Veränderungen der Kunststoffoberflächen können auf eine effiziente und ökonomische Art Produkte mit auf den speziellen Einsatzzweck optimierten Grenzflächeneigenschaften hergestellt werden. Diese veränderten Eigenschaften können unter anderem zu hydrophilierten, schmutzabweisenden, bedruckbaren, lösemittelbeständigeren und flammhemmenden Oberflächen führen. Einen Überblick über die vielfältigen Möglichkeiten zur Eigenschaftsveränderung synthetischer Polymere durch photoinduzierte Pfropfungen liefert Arthur, Jr. J. C. in Dev. Polymer Photochem. 2 (1982) 39.

Es sind verschiedene Verfahren bekannt, um die Oberflächen von Polymeren durch Pfropfpolymerisationen zu modifizieren. Im allgemeinen geht der Pfropfreaktion eine Aktivierung der entsprechenden Oberfläche voraus, d.h. es werden entweder vor der eigentlichen Pfropfung oder auch zeitgleich mit ihr reaktive Zentren auf der Oberfläche des Substrats erzeugt, die im weiteren Verlauf der Reaktion als Ausgangspunkte für die eigentliche Polymerisation dienen. Diese Oberflächenaktivierung kann z.B. durch gamma-Strahlung, ultraviolette Strahlung mit Wellenlängen kleiner als 180 nm, Plasmabehandlung, Ozonisierung, elektrische Entladungen, Flammenbehandlung, Makroinitiatoren oder Photoinitiatoren erfolgen.

Es ist aus US 4 189 364 bekannt, daß sich Polymeroberflächen durch Eintauchen in eine Lösung von 2-Hydroxyethylmethacrylat und -dimethacrylat und Bestrahlung mit einer ⁶⁰Co-Quelle so modifizieren lassen, daß die neu erzeugte Oberfläche eine deutlich verbesserte Wasseraufnahme zeigt. Nachteilig an dieser Methode ist, daß sie das Vorhandensein einer aufwendigen und entsprechend kostspieligen ⁶⁰Co-Quelle voraussetzt. Weiterhin ist die Art der von dieser Quelle ausgehenden Strahlung unspezifisch und nicht auf die Oberfläche des zu modifizierenden Substrates beschränkt, was zu unerwünschten Veränderungen der mechanischen und chemischen Bulkeigenschaften des Polymers führt.

Die Aktivierung einer Oberfläche mit ultravioletter Strahlung einer Wellenlänge kleiner als 180 nm setzt die weitgehende Abwesenheit von Sauerstoff während der Aktivierungsphase voraus, da dieser bei der genannten Wellenlänge eine sehr starke Absorption zeigt. Da andererseits die Aktivierung durch diese Methode, die letztendlich auf Bildung oxidierter Reaktionsstellen beruht, einen Mindestpartialdruck an Sauerstoff voraussetzt, ist ein reproduzierbarer Aktivierungsschritt im Rahmen eines technischen Verfahrens nur unter großen Schwierigkeiten möglich. In diesem Zusammenhang bereitet auch die kontinuierliche Intensitätsabnahme entsprechender Bestrahlungsröhren große Probleme. Daneben ist eine unerwünschte Veränderung der Bulkeigenschaften des Substrats durch die Bestrahlung nicht zu vermeiden, da bei derartig energiereicher Strahlung auch Kohlenstoff-Kohlenstoff-Bindungen gebrochen werden können.

Eine Plasmavorbehandlung, wie in EP 0 574352 beschrieben, stellt ebenfalls eine unter Vakuum ablaufende Methode dar, die das Verfahren praktisch auf einen Batch-Prozeß reduziert, d.h. eine kontinuierliche Prozeßführung stark erschwert. Weiterhin ist auch hier eine entsprechend aufwendige Geräteausstattung erforderlich. Zudem ist die Aktivierung aufgrund der Vielzahl an unabhängigen Plasmaparametern schwierig zu reproduzieren.

Die Ozonisierung einer Polymeroberfläche zur Bildung oxidierter Reaktionszentren, wie sie z.B. in US 4 311 573, US 4 589 964 oder EP 0 378 511 beschrieben wird, ist aufgrund der toxikologischen Bedenklichkeit und der Flüchtigkeit von Ozon nur unter Anwendung besonderer Schutzmaßnahmen durchzuführen. Die reproduzierbare Einstellung entsprechender Ozonkonzentrationen, um im Rahmen der Qualitätssicherung eines technologischen Prozesses die gleichbleibende Qualität der hergestellten Produkte sicherstellen zu können, erfordert aufwendige Kontrollmechanismen.

Elektrische Entladungen, wie sie z.B. im Rahmen einer Korona-Behandlung zur Oberflächenaktivierung eingesetzt werden, sind aufgrund der methodenspezifischen Anforderungen im allgemeinen nur auf großflächige Substrate mit einfacher Geometrie, wie Folienbahnen oder extrudierte Profile, anwendbar. Analoges gilt auch für die Flammenbehandlung von Polymeren, wobei in diesem Fall noch die stärkere thermische Belastung besonders exponierter Stellen des Substrats hinzukommt. Einen Vergleich beider Methoden mit denkbaren und bereits realisierten Anwendungen liefert z.B. Gerstenberg, K. W. in Coating 9 (1994) 324 und Coating 10 (1994) 355.

Weitere Möglichkeiten zur Erzeugung von aktivierten Oberflächen bietet die Aufbringung von Initiatormolekülen, wie Makroinitiatoren. oder von Photoinitiatoren.

Die Wirkung von Makroinitiatoren beruht darauf, daß vorgebildete Polymere mit reaktiven Gruppen auf das zu modifizierende Substrat aufgebracht werden. Die Anbindung an das Substrat ist in diesem Fall rein physikalisch. Die eigentliche Pfropfung wird durch eine thermische oder photochemische Anregung der entsprechenden reaktiven Gruppen des Makroinitiators gestartet. Diese Methode setzt einerseits die Synthese von häufig nicht kommerziell erhältlichen Makroinitiatoren voraus, andererseits gelingt es nicht immer, die dauerhafte physikalische Anbindung des Makroinitiators an das jeweilige Substrat auch unter Lösemittel- und Temperatureinfluß zu gewährleisten.

Die Verwendung von Photoinitiatoren zur Pfropfung basiert im wesentlichen auf einer Kettenübertragung und ist universell anwendbar. Initiatorradikale oder Polymerradikale abstrahieren dabei vom jeweiligen Substrat z.B. Wasserstoff- oder Chloratome und bilden Makroradikale, die die Pfropfpolymerisation der zugesetzten Monomeren auslösen. Wie von H. G. Elias in Makromoleküle Bd. 1 (1990) 572 ff. beschrieben, ist die erreichbare Pfropfausbeute dabei jedoch durch die geringen Übertragungskonstanten von Polymerradikalen sehr niedrig.

Die Pfropfung von HDPE, LDPE und Polystyrol mit Acrylsäure und Benzophenon als Photoinitiator in der Gasphase, die von K.Allmer et al. in J.Polym.Sc., Part A, 26, 2099-2111 (1988) beschrieben wurde, ist ein solches Verfahren mit niedrigen Übertragungskonstanten. Zudem eignet es sich nicht für Monomere, wie Natriumstyrolsulfonat, die nicht in die Gasphase überführbar sind. Auch die Methode von S.Tazuke et al., beschrieben in ACS Symp. Ser. 121, 217-241 (1980), bei der das Polymersubstrat in eine den Photoinitiator und das Monomer enthaltenden Lösung getaucht und bestrahlt wird, gehört zu den Verfahren, bei denen keine die Pfropfung fördernde Vorbehandlung des Substrats stattfindet und die daher niedrige Übertragungskonstanten aufweisen.

Dagegen wurden nach H.Kubota et al. I (J.Polym.Sc.:Polym.Ed.Lett. 19, 457-462 (1981)) PP- und LDPE-Filme mit einer Lösung vorbehandelt, die den Photoinitator, nämlich wiederum Benzophenon oder Anthrachinon oder Benzoylperoxid, und Polyvinylacetat als Träger für den Photoinitiator enthielt. Dadurch wurde der Photoinitiator nach dem Entfernen des Lösemittels, nämlich Aceton oder Chloroform, auf der Substratoberfläche physikalisch fixiert. Methylmethacrylat wurde in der Gasphase und Acrylsäure sowie Methacrylsäure wurden in flüssiger Phase mit hohen Ausbeuten auf die vorbehandelten Substratoberflächen gepfropft. H.Kubota et al II, J.Polym.Sc.:Polym.Ed.Lett., 20, 17-21 (1982), haben den Einfluß verschiedener Lösemittel auf die Gasphasen-Pfropfung der Monomeren auf wie beschrieben vorbehandelte Substratoberflächen untersucht. Ein Nachteil dieses Verfahrens ist die Mitverwendung eines Filmbildners, nämlich Polyvinylacetat, als Träger für den Photoinitiator. Zum einen ist es nicht ohne weiteres möglich, den Photoinitiator so homogen wie erwünscht in dem Filmbildner zu verteilen. Weiterhin ist es unvermeidlich, daß auch der Filmbildner auf das Substrat gepfropft wird, was die Einheitlichkeit der Beschichtung beeinträchtigt. Schließlich wird das Monomer nicht nur auf das zu modifizierende Substrat, sondern unvermeidlich auch auf den Filmbildner gepfropft, im Extremfall, je nach der Pfropfbarkeit des jeweiligen Substrats, praktisch ausschließlich auf den Filmbildner.

Z. P. Yao und B. R 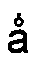 nby haben ein kontinuierliches Verfahren beschrieben, bei dem Acrylamid oder Acrylsäure auf HDPE-Filme gepfropft wird. (J.Appl.Pol.Sci., 40 1647 (1990) oder Macromol. Chem, Macromol Symp. 63, 55-67 (1992)). Dazu wird der Film durch eine Lösung von Monomer und Benzophenon als Photoinitiator in Aceton als Lösemittel geführt ("presoaking") und bestrahlt. Im Falle von Acrylamid wirkte zusätzlich sublimierender Acrylamiddampf bei der strahleninduzierten Pfropfung mit. Das Verfahren eignet sich zur Beschichtung von flächigen Gebilden, wie Filmen. Eine grundlegende Modifizierung einer regellos geformten Substratoberfläche ist nicht möglich. Weiterhin ist nachteilig, daß die Zeit für das "presoaking" und die Bestrahlungszeit starr aneinander gekoppelt sind, da das Verfahren kontinuierlich arbeitet. Ein weiterer Nachteil besteht darin, daß eine Thermostatisierung der "presoaking"-Lösung nicht vorgesehen ist. Das Verfahren ist unflexibel und verzichtet auf mehrere wichtige Freiheitsgrade. Eine optimale Abstimmung der für den Erfolg entscheidenden Parameter, nämlich Konzentration von Initiator. Monomer und Lösemittel, Temperatur der Lösung, Zeitdauer des "presoaking" und Zeitdauer der Bestrahlung, ist nicht möglich.

### 2. Kurzbeschreibung der Erfindung

Der vorliegenden Erfindung liegt die Aufgabe zugrunde, ein technisch einfaches und ökonomisch optimiertes Verfahren zur Modifizierung von beliebig gestalteten Polymeroberflächen durch eine kontrollierte Pfropfpolymerisation mit beliebigen aliphatisch ungesätigten Monomeren zu entwickeln, das die Nachteile der beschriebenen Verfahren nicht zeigt.

Diese Aufgabe wurde erfindungsgemäß durch ein Verfahren zur Modifizierung der Oberfläche von Polymersubstraten mittels durch elektromagnetische Strahlung oder thermisch induzierter Pfropfpolymerisation (Propfung) mindestens eines olefinisch ungesättigten Monomers gelöst, bei dem das Polymersubstrat vor der Pfropfung mit einem Photoinitiator oder einem Thermoinitiator und dem mindestens einen olefinisch ungesättigten Monomer vorbehandelt wird, und nach dieser Vorbehandlung an der Oberfläche des Polymersubstrats haftende Monomere und Inititiator entfernt werden.

Bei einer bestimmten Ausführungsform des Verfahrens nach der Erfindung erfolgt die Pfropfung unmittelbar nach der Vorbehandlung und der Entfernung der an der Oberfläche haftenden Monomere und Initiator: In diesem Fall wird also nur das zur Vorbehandlung eingesetzte Monomer bzw. die zur Vorbehandlung eingesetzte Monomerenmischung pfropfpolymerisiert (Variante A). Bei einer anderen Variante wird auf das vorbehandelte Polymersubstrat mindestens ein weiteres Monomer aufgebracht, das mit dem zur Vorbehandlung eingesetzten Monomer identisch oder von ihm verschieden sein kann, und dann werden das zur Vorbehandlung eingesetzte sowie das nachträglich aufgebrachte Monomer gemeinsam pfropfpolymerisiert (Variante B).

Gegenstände der Erfindung sind weiterhin die Verwendung der erfindungsgemäß modifizierte Polymersubstrate zur Herstellung von medizintechnischen Erzeugnissen oder von Hygieneerzeugnissen, sowie die medizintechnischen Erzeugnisse und die Hygieneerzeugnisse als solche.

### 3. Vorteile der Erfindung

Das erfindungsgemäße Verfahren weist eine bemerkenswerte Kombination von Vorteilen auf. Man erzielt mit beliebigen Monomeren auf chemisch sehr verschiedenartigen Substraten dichte und gleichmäßige Beschichtungen von hervorragender Beständigkeit gegenüber Umgebungseinflüssen einschließlich von Lösemitteln und Abriebkräften. Dazu bedarf es keiner aufwendigen Vakuumeinrichtungen. Die photochemisch induzierte (strahlungsinduzierte) Pfropfpolymerisation ermöglicht, unter sonst gleichen Bedingungen, kürzere Bestrahlungszeiten als die Pfropfpolymerisation ohne Vorbehandlung. Weiterhin kann die Aktivierungsenergie der photochemisch induzierten Polymerisation durch geeignete Wahl des Photoinitiators dem jeweiligen Polymersubstrat angepaßt werden, so daß unerwünschte Veränderungen der mechanischen oder chemischen Eigenschaften des Substrats vermieden werden. Die mit dem erfindungsgemäßen Verfahren zu modifizierenden Kunststoffoberflächen müssen keine bestimmte Topographie aufweisen; Objekte mit einer dreidimensional geprägten Struktur eignen sich ebensogut wie glatte Flächen. Dies ist insbesondere bei der nachträglichen Modifizierung von vorgefertigten Gegenständen von Vorteil. Ein besonderer Vorteil der thermisch induzierten Pfropfpolymerisation nach der Erfindung besteht darin, daß die thermische Induzierung der Pfropfung, z.B. mittels Infrarotstrahlen oder Mikrowellen, billiger ist als die Initiierung mit UV-Strahlen im bevorzugten Bereich von 200 bis 400 nm und zudem auch Zonen erreicht, die für UV-Strahlen unzugänglich sind, z.B. im Inneren von geformten Hohlräumen. Besonders bei Induzierung der Pfropfpolymerisation durch Mikrowellenstrahlung lassen sich auch kleinste geformte Hohlräume, wie die Innenlumen von Schläuchen, z.B. Blutschläuchen oder Kathetern, effizient und ökonomisch modifizieren.

### 4. Beschreibung der Erfindung

### 4.1 Polymersubstrate

Zu den polymeren Substraten, deren Oberflächen erfindungsgemäß modifiziert werden, zählen Homo- und Copolymere, beispielsweise Polyolefine, wie Polyethylen (HDPE und LDPE), Polypropylen, Polyisobutylen, Polybutadien, Polyisopren, natürliche Kautschuke und Polyethylen-co-propylen; halogenhaltige Polymere, wie Polyvinylchlorid, Polyvinylidenchlorid, Polychloropren und Polytetrafluorethylen; Polymere und Copolymere aus vinylaromatischen Monomeren, wie Polystyrol, Polyvinyltoluol, Polystyrol-co-vinyltoluol, Polystyrol-co-acrylnitril, Polystyrol-co-butadien-co-acrylnitril; Polykondensate, beispielsweise Polyester, wie Polyethylenterephthalat und Polybutylenterephthalat; Polyamide, wie Polycaprolactam, Polylaurinlactam und das Polykondensat aus Hexamethylendiamin und Adipinsäure; Polyetherblockamide, z.B aus Laurinlactam und Polyethylenglykol mit durchschnittlich 8, 12 oder 16 Ethylenoxygruppen; weiterhin Polyurethane, Polyether, Polycarbonate, Polysulfone. Polyetherketone, Polyesteramide und -imide, Polyacrylnitril, Polyacrylate und - methacrylate. Auch Blends aus zwei oder mehr Polymeren oder Copolymeren lassen sich nach dem erfindungsgemäßen Verfahren an der Oberfläche modifizieren, ebenso wie Kombinationen aus verschiedenen Polymeren, die durch Verkleben, Verschweißen oder Zusammenschmelzen miteinander verbunden sind, einschließlich der Übergangsstellen.

### 4.2 Olefinisch ungesättigte Monomere

Für das Verfahren eignen sich die verschiedenartigsten Monomere mit mindestens einer olefinischen Doppelbindung, auch solche, die nicht oder nur schwierig in die Gasphase überführbar sind. Von der Art ihrer funktionellen Gruppen hängt es ab, in welchem Sinne die Oberflächen der Polymersubstrate modifiziert werden, z.B. hydrophil, hydrophob, lösemittelbeständiger, schmutzabweisend, bakterienabweisend, zellproliferationshemmend usw. Die Monomere können, wie erwähnt, in zwei Phasen des erfindungsgemäßen Verfahrens angewandt werden, zunächst bei der Vorbehandlung des Polymersubstrats und gegebenenfalls zusätzlich nach der Vorbehandlung und vor der Pfropfpolymerisation. Die folgenden Erläuterungen beziehen sich auf die Monomeren für beide Phasen.

Geeignete monoolefinische Monomere sind z.B. Acryl- oder Methacrylverbindungen der allgemeinen Formel

H₂C=CR₁-COOR₂ (I)

sowie Acrylamide und Methacrylamide der allgemeinen Formel

H₂C=CR₁-CONR₂R₃ (II)

wobei R1 ein Wasserstoffatom oder eine Methylgruppe bedeutet und
R2 und R₃ gleich oder verschieden sein können und jeweils ein Wasserstoffatom, ein Metallatom oder einen verzweigten oder unverzweigten aliphatischen, cycloaliphatischen, heterocyclischen oder aromatischen Kohlenwasserstoffrest mit bis zu 20 Kohlenstoffatomen oder einen solchen Kohlenwasserstoffrest, der durch Carboxylgruppen. Carboxylatgruppen. Sulfonatgruppen, Alkylaminogruppen, Alkoxygruppen, Halogene, Hydroxygruppen, Aminogruppen. Dialkylaminogruppen. Phosphatgruppen, Phosphonatgruppen, Sulfatgruppen. Carboxamidogruppen, Sulfonamidogruppen, Phosphonamidogruppen oder Kombinationen dieser Gruppen derivatisiert ist, bezeichnen.

Weitere geeignete monoolefinische Monomere sind Vinylverbindungen der allgemeinen Formeln

R₄CH=CHR₅ (III)

oder

H₂C=CH-COOR₄ (IV)

und Malein- und Fumarsäurederivate der allgemeinen Formel

R₄OOC-HC=CH-COOR₄ (V)

wobei die Substituenten
R₄ gleich oder verschieden sein können und jeweils ein Wasserstoffatom, einen aromatischen Rest oder eine Methylgruppe bezeichnen oder die gleiche Bedeutung wie R₂ haben und
R₅ für ein Wasserstoffatom, eine Methylgruppe oder eine Hydroxylgruppe steht, dieselbe Bedeutung wie R₂ hat oder eine Ethergruppe der Formel -OR₂, in der R₂ wie zuvor definiert ist, bezeichnet.

Bevorzugte, unter die Formeln I bis V fallende Monomere für das Verfahren nach der Erfindung sind
- Carboxyl- oder Carboxylatgruppen enthaltende Monomere, insbesondere (Meth)acrylsäure, Maleinsäure und deren entsprechende Derivate,
- Sulfonatgruppen enthaltende Monomere,
- Hydroxylgruppen enthaltende Monomere,
- Amino- oder Ammoniumgruppen enthaltende Monomere sowie
- Phospatgruppen enthaltende Monomere.

Auch Monomere mit zwei olefinischen Doppelbindungen der allgemeinen Formel

CH₂=CR¹-R⁶-CR¹=CH₂ (VI)

in R⁶ eine zweiwertigen organischen Rest bezeichnet und R¹ die angegebene Bedeutung hat, eignen sich zur Verwendung in dem erfindungsgemäßen Verfahren. Sie werden vorzugsweise in Verbindung mit monoolefinischen Monomeren eingesetzt, zweckmäßig in Mengen von 0,5 bis 10 Molprozent, bezogen auf die monoolefinischen Monomere, wodurch vernetzte Pfropfcopolymere entstehen.

Von den geeigneten monoolefinischen Monomeren I bis V seien z.B. erwähnt: (Meth)acrylsäure. Methyl(meth)acrylat. Ethyl(meth)acrylat, Butyl(meth)acrylat. 2-Ethylhexyl(meth)acrylat, tert.-Butylaminoethyl(meth)acrylat, 2-Hydroxyethyl(meth)acrylat, 4-Hydroxybutyl-(meth)acrylat, (Meth)acrylsäureamid, (Meth)acrylnitril, Vinylsulfonsäure, Vinylphosphonsäure, Styrolsulfonsäure, Natriumvinylsulfonat, Natriumstyrolsulfonat, Natriumvinylphosphonat, Natriumvinylstyrolsulfonat, tert. -Butylaminoethylmethacrylat, Dimethylaminoethylmethacrylat, Diethylaminoethylmethacrylat, Dimethylaminoneopentylacrylat, Maleinsäure, Maleinsäureanhydrid, Maleinsäurediethylester, Maleinsäureimid, Fumarsäure und Fumarsäuredimethylester

Beispiele für geeignete diolefinische Monomere. VI sind u.a. 1,4-Butandioldi(meth)acrylat, Ethylenglykoldimethacrylat, Polyethylenglykol(600)-diacrylat, N,N-Methylenbisacrylamid und Divinylbenzol.

### 4.3 Photoinitiatoren

Als Polymerisationsinitiatoren lassen sich alle gängigen Photoinitiatoren verwenden, wie Benzoine, Benzilketale, α-Hydroxyketone, Peroxide, Azoverbindungen, Azoxyverbindungen, Diazosulfonate. Diazosulfone. Diazothioether, Diacyldiazomethane, Diarylsulfide, heteroaromatisch substituierte Disulfide, Diaroylsulfide. Tetraalkylthiuramdisulfide, Dithiocarbonate oder Dithiocarbamate. Im einzelnen seien Benzophenon, Acetophenon, Fluorenon, Benzaldehyd, Propiophenon, Anthrachinon, Carbazol, 3- oder 4-Methylacetophenon, 4.4'-Dimethoxybenzophenon, Allylacetophenon, 2,2'-Diphenoxyacetophenon, Benzoinmethylether, Benzoinethylether, Benzoinpropylether, Benzoinacetat, Benzoinphenylcarbamat, Benzoinacrylat, Benzoinphenylether, Benzoylperoxid. Dicumylperoxid, Azobisisobutyronitril, Phenyldisulfid. Acylphosphanoxide oder Chlormethylanthrachinon sowie Kombinationen hiervon genannt. Bevorzugte, besonders kurze Bestrahlungszeiten ermöglichende Photoinitiatoren sind Benzoine, Benzoinderivate. Benzilketale und α-Hydroxyketone.

### 4.4 Thermoinitiatoren

Unter Thermoinitiatoren im Sinne dieser Erfindung werden Verbindungen verstanden, die beim Erhitzen unter Bildung freier Radikale zerfallen, die ihrerseits die Pfropfpolymerisation auslösen. Von den geeigneten Verbindungsklassen seien beispielsweise genannt: Azoverbindungen, Peroxide, Hydroperoxide, Perester, Persulfate. Peroxycarbonate, Ketonperoxide, Disulfide sowie Dibenzylderivate bzw. Kombinationen dieser Verbindungen. Diese Thermoinitiatoren sind gut bekannt, und viele sind im Handel erhältlich.

### 4.5 Vorbehandung der Polymersubstrate

Es ist ein wesentliches Merkmal der Erfindung, daß das Polymersubstrat zunächst mit einem Photoinitiator oder einem Thermoinitiator und mindestens einem Monomer vorbehandelt wird. Dabei wird der Initiator zweckmäßig in einer Menge von 0,01 bis 40 Gewichtsprozent, vorzugsweise von 0,05 bis 15 Gewichtsprozent, bezogen auf das Monomer, eingesetzt (Mengen für beide Initiatoren gleich). Die Wahl des Initiators und des Monomers richtet sich u.a. nach der Löslichkeit dieser Komponenten ineinander und der chemischen Natur des Polymersubstrats. Das Monomer muß das Polymersubstrat anquellen können und damit die Penetration des Initiators in die oberflächennahen Zonen des Polymersubstrats ermöglichen. Ob das für die Vorbehandlung verwendete Monomer die erwünschten oberflächenmodifizierenden Eigenschaften vermittelt, spielt zumindest bei der Ausführungsform des Verfahrens keine Rolle, bei der man nach der Vorbehandlung ein weiteres Monomer aufbringt (Variante B) und dieses zusammen mit dem zur Vorbehandlung verwendeten Monomer auf die Substratoberfläche pfropfpolymerisiert. Man kann also durchaus mit einem Monomer vorbehandeln, das das Polymersubstrat gut anquillt und den Initiator gut löst und penetrieren läßt, aber nicht die letztlich gewünschten modifizierenden Eigenschaften vermittelt, und in der Pfropfphase mit einem weiteren Monomer arbeiten, das den betreffenden Initiator nicht oder nicht gut löst, aber die gewünschten Eigenschaften ergibt. Die optimalen Kombinationen von Substratpolymer, Initiator und Monomer für die Vorbehandlung lassen sich durch orientierende Versuche unschwer ermitteln. Beispielsweise sind (Meth)acrylsäure und/oder ihre Ester in Verbindung mit Azobisisobutyronitril gut für die Vorbehandlung von Polyamid-, Polyurethan-, Polyetherblockamid- oder Polyesteramid- oder -imid-Substraten geeignet.

Es ist zweckmäßig, daß die Mischung zur Vorbehandlung des Polymersubstrats zumindest im wesentlichen aus dem Initiator und mindestens einem Monomer besteht. Die Mischung kann also ausschließlich aus den genannten Bestandteilen bestehen oder eine definierte Menge, z.B. bis zu 80 Gewichtsprozent, bezogen auf die Mischung eines Lösen mittels enthalten. Bei Thermoinitiatoren kann der Gehalt an Lösemittel vorteilhaft bis zu 50 Gewichtsprozent, bei Photoinitiatoren bis zu 40 und insbesondere bis zu 20 Gewichtsprozent betragen. Die Mitverwendung eines Lösemittels ist zweckmäßig, wenn sich das Monomer und der Initiator nicht oder nicht gut zu einer homogenen Mischung oder Lösung mischen lassen oder das Substrat mit dem Monomer allein zu stark quillt. Insbesondere für eine nachträgliche Modifizierung von englumigen Hohlräumen ist es von entscheidender Bedeutung, daß eine zu starke Quellung, verbunden mit einer Volumenexpansion des zu modifizierenden Materials und einer Verkleinerung des Lumens, vermieden wird. Geeignete Lösemittel sind z.B. Wasser, Aceton, Methylethylketon, Butanon, Cyclohexanon, Diethylether, Tetrahydrofuran, Dioxan, Methanol, Ethanol, Propanol, Butanol, Cyclohexanol, Dimethylacetamid, Dimethylsulfoxid, Dimethylformamid, Heptan, Cyclohexan, Benzol, Toluol, Dichlormethan, Trichlormethan, Ethylacetat, Propylacetat, Amylacetat, Acetonitril oder homogene Mischungen aus mehreren dieser Stoffe. Die optimale Art und Menge des Lösemittels lassen sich für eine bestimmte Aufgabenstellung durch orientierende Versuche unschwer ermitteln.

Die Behandlung des Polymersubstrats mit dem Initiator und dem Monomer soll so erfolgen, daß die Oberfläche des Polymersubstrats leicht quillt. Die Behandlungsdauer hängt von der jeweiligen Kombination von Polymersubstrat, Initiator und Monomer sowie von der Temperatur ab. Sie braucht nur 1 bis 10 Sekunden zu betragen und beträgt vorteilhaft 1 bis 5 Sekunden. Die optimalen Temperaturen und Behandlungszeiten lassen sich unschwer durch orientierende Versuche ermitteln; typische Vorgehensweisen sind in den Beispielen aufgezeigt. Vorzugsweise erfolgt die Behandlung des Polymersubstrats mit einem Thermoinitiator und dem mindestens einen aliphatisch ungesättigten Monomer bei einer Temperatur von -20 bis 200°C, besonders bevorzugt bei Temperaturen von 0 bis 80°C und insbesondere bei 10 bis 60°C. Bei Verwendung eines Photoinitiators liegen die bevorzugten Behandlungstemperaturen bei 10 bis 200°C, besonders bevorzugt bei 20 bis 80°C und insbesondere bei 30 bis 60°C.

Lösungen aus oder mit dem Monomer und dem Initiator zur Behandlung des Polymersubstrats können durch übliche Beschichtungsverfahren. wie Aufsprühen, Bestreichen oder Tauchen, auf das Polymersubstrat aufgebracht werden.

Vor der Pfropfpolymerisation wird vom vorbehandelten Substrat oberflächlich anhaftendes Monomer und anhaftender Initiator entfernt. Dies kann z.B. durch kurzzeitiges Tauchen (zweckmäßig einige Sekunden bis zu etwa einer Minute) in ein geeignetes Lösemittel (wie zuvor beschrieben) geschehen. Alternativ kann man das vorbehandelte Substrat mit Lösemittel abspülen. Wenn man auf diese oder jene Weise anhaftendes Monomer und anhaftenden Initiator entfernt, erhält man bei der Pfropfpolymerisation eine in noch höherem Maße extraktionsbeständige und homogene Beschichtung.

### 4.7 Aufbringen weiterer Monomerer

Gemäß der Variante B wird nach der Vorbehandlung, gegebenenfalls nach Entfernung von anhaftendem Monomer und Initiator, mindestens ein weiteres olefinisch ungesättigtes Monomer auf die Substratoberfläche aufgebracht. Dies ist dann erforderlich, wenn für die Vorbehandlung ein Monomer eingesetzt wurde oder werden mußte, das für sich dem Polymersubstrat nicht die gewünschten Eigenschaften erteilt. Für manche Anwendungen ist auch die größere Schichtdicke vorteilhaft, die man auf diese Weise erzielt. Die Auswahl der nach der Vorbehandlung aufgebrachten weiteren Monomeren hängt von der gewünschten Art der Modifizierung der Oberfläche des Polymersubstrats ab. So ergeben z.B. Hydroxyethyl(meth)acrylat, 4-Hydroxybutyl(meth)acrylat oder vinylierte Saccharide hydrophilierte Oberflächen.

Die weiteren Monomere können wiederum durch übliche Beschichtungsverfahren, wie Aufsprühen, Bestreichen oder Tauchen, auf das Polymersubstrat aufgebracht werden. Wenn die Monomere gelöst sind, z.B. in einem der zuvor genannten Lösemittel, kann man das Lösemittel vor oder während der Pfropfung verdampfen lassen.

### 4.8 Pfropfpolymerisation

Die Pfropfpolymerisation der Monomeren wird durch Erhitzen des Substrats ausgelöst, wenn ein Thermoinitiator verwendet wurde, und durch Bestrahlen bei Verwendung eines Photoinitiators. Das Polymersubstrat kann, wie beschrieben, lediglich vorbehandelt (Variante A) oder zusätzlich mit mindestens einem weiteren Monomer versehen sein (Variante B). Statt die weiteren Monomere, wie erwähnt, nach üblichen Beschichtungsverfahren aufzubringen, kann man auch das Aufbringen der Monomeren mit der Pfropfung verbinden, indem man das vorbehandelte Substrat in eine erhitzte Lösung des Monomers taucht. Als Lösemittel sind wiederum die für die Vorbehandlung brauchbaren Lösemittel geeignet. Man arbeitet im allgemeinen mit Lösungen, die 2 bis 50 Gewichtsprozent Monomer enthalten. Das vorbehandelte Polymersubstrat steht in Kontakt mit einer flüssigen Phase, nämlich dem Monomer bzw. dessen Lösung. Es kann also getaucht oder mit dem Monomer bzw. dessen Lösung beschichtet sein.

Bei Verwendung eines Photoinitiators wird die Pfropfpolymerisation der Monomeren im allgemeinen durch elektromagnetische Strahlung im Wellenlängenbereich von 180 bis 1.200 nm, bevorzugt von 200 bis 800 nm und insbesondere von 200 bis 400 nm induziert. Strahlung in diesem Wellenlängenbereich ist relativ weich und greift in aller Regel das Polymersubstrat nicht an. Man arbeitet z.B. mit einem Excimer-UV-Strahler der Fa. Heraeus, D-63801 Neuostheim mit kontinuierlicher Strahlung, z.B. mit XeCl oder XeF als Strahlermedium. Im Prinzip sind auch Quecksilberdampflampen mit breitem UV-Spektrum und Strahlungsanteilen im sichtbaren Bereich bzw. in den obengenannten Bereichen brauchbar. Die Expositionszeiten betragen im allgemeinen 60 bis 300 Sekunden. Die Expositionszeiten hängen u.a. von der Geometrie. der bestrahlten Substrate ab. Gegenstände mit ausgeprägter dreidimensionaler Charakteristik müssen gedreht werden und erfordern längere Bestrahlung. Die strahlungsinduzierte Pfropfpolymerisation läuft vorteilhaft im Temperaturbereich von 0 bis 100 °C ab,

Bei Verwendung eines Thermoinitiators wird die Pfropfpolymerisation durch Erhitzen des vorbehandelten und gegebenenfalls mit weiterem Monomer versehenen Polymersubstrats ausgelöst. Die angewandten Temperaturen hängen von der Zerfallsrate des Thermoinitiators ab; sie müssen auf jeden Fall unterhalb der Schmelz- bzw. Erweichungstemperatur des Polymersubstrats liegen. Man arbeitet im allgemeinen bei 50 bis 150°C. Sowohl bei der Variante A als auch bei der Variante B mit Aufbringen mindestens eines weiteren Monomers durch Beschichten kann man die erforderliche Temperatur elegant durch Strahlungsheizung einstellen, z.B. mit Infrarotstrahlen oder Mikrowellen. Die erforderlichen Bestrahlungszeiten lassen sich durch orientierende Versuche unschwer ermitteln; sie liegen im allgemeinen bei 1 bis 60 min.

### 4.9 Wahlweise Nachbehandlung

Nach der Pfropfpolymerisation kann man etwaige Restmonomere durch Extraktion mit einem Lösemittel entfernen. So können hydrophile Monomere mit Wasser extrahiert werden. Weiterhin lassen sich eingeführte funktionelle Gruppen in üblicher Weise ganz oder teilweise in Derivate überführen. So kann man Carboxylgruppen zu Carboxylatgruppen neutralisieren, Carbonestergruppen zu Hydroxyl-, Carboxyl- oder Carboxylatgruppen sowie Carbonamid- oder Nitrilgruppen zu Carboxylgruppen verseifen. Weitere Derivatisierungen von erfindungsgemäß modifizierten Polymersubstraten können nach allgemeinen Verfahren (H. Beyer, Lehrbuch der organischen Chemie, S. Hirzel Verlag, Stuttgart, 1988, S. 260 ff) vorgenommen werden.

### 5. Verwendung der modifizierten Polymersubstrate

Weitere Gegenstände der vorliegenden Erfindung sind die Verwendung der erfindungsgemäß modifizierten Polymersubstrate zur Herstellung von medizintechnischen Erzeugnissen und die so hergestellten medizintechnischen Erzeugnisse als solche. Die Erzeugnisse können erfindungsgemäß modifizierte Polymersubstrate enthalten oder daraus bestehen. Solche Erzeugnisse basieren vorzugsweise auf Polyamiden, Polyurethanen, Polyetherblockamiden, Polyesteramiden oder -imiden, PVC, Polysiloxanen, Polymethacrylat oder Polyterephthalaten, die erfindungsgemäß modifizierte Oberflächen aufweisen, vorzugsweise mit Carboxyl- oder Carboxylatgruppen, Sulfonatgruppen, Hydroxylgruppen und/oder Aminogruppen enthaltenden Monomeren modifizierte Oberflächen. Medizintechnische Erzeugnisse dieser Art sind beispielsweise und insbesondere Katheter, Blutbeutel, Drainagen, Führungsdrähte und Operationsbestecke, Intraokularlinsen und Kontaktlinsen.

Außerdem sind Gegenstände der vorliegenden Erfindung die Verwendung der erfindungsgemäß an der Oberfläche modifizierten Polymersubstrate zur Herstellung von Hygieneerzeugnissen und die Hygieneerzeugnisse als solche. Die obigen Ausführungen über bevorzugte Materialien für medizinische Erzeugnisse gelten entsprechend. Solche Hygieneerzeugnisse sind beispielsweise Zahnbürsten, Toilettensitze, Kämme und Verpackungsmaterialien. Unter die Bezeichnung Hygieneerzeugnisse fallen auch andere Gegenstände, die u.U. mit vielen Menschen in Berührung kommen, wie Telefonhörer, Handläufe von Treppen, Tür- und Fenstergriffe sowie Haltegurte und -griffe in öffentlichen Verkehrsmitteln.

Die folgenden Beispiele sollen die Erfindung erläutern, nicht aber ihren Anwendungsbereich begrenzen.

### Beispiel 1 - Variante A / Thermisch initiierte Pfropfung

Es werden 1,5 g Azoisobutyronitril in 62,5 g Acrylsäure, 6 g Natriumstyrolsulfonat und 30 g Wasser gelöst. Diese Mischung wird auf 35°C erwärmt. In die Mischung wird ein handelsüblicher Katheter aus Polyurethan (TECOFLEX^{(R)} der Fa. Thermedix GmbH, Heidelberg) für die Dauer von 5 sec eingetaucht. Um den Katheterinnenraum frei zu halten, wird dabei ein kontinuierlicher Schutzgasstrom (Stickstoff oder Argon) durch den Katheter geleitet. Der Katheter wird nach Beendigung der Vorbehandlung entnommen und für 10 sec in entmineralisiertes Wasser von 25°C getaucht, wobei weiterhin Schutzgas durchgeleitet wird. Im Anschluß wird der Katheter in einer speziellen Apparatur, die eine thermostatisierte Stickstoffatmosphäre von 80°C enthält, für 30 min gelagert. Danach wird der Katheter entnommen und 2 h in 1000 ml entmineralisiertem Wasser von 60°C gewaschen.

### Beispiel 2 - Variante A / Thermisch initiierte Pfropfung

Es werden 0,5 g Azoisobutyronitril in 58 g Acrylsäure, 2 g Natriumstyrolsulfonat und 39,5 g Wasser gelöst. Diese Mischung wird auf 35°C erwärmt und für 10 sec durch das Lumen eines handelsüblichen Katheters aus Polyurethan (TECOFLEX^{(R)} der Fa. THERMEDIX GmbH, Heidelberg) geleitet (Durchflußrate 0,2 ml/sec). Danach wird das Lumen mit Stickstoff freigeblasen. Der Katheter wird nach Beendigung der Vorbehandlung in einen Mikrowellenofen gehängt, dessen Innenraum mit Schutzgas (Stickstoff oder Argon) gefüllt ist. Die Pfropfung erfolgt durch 5-minütige Mikrowellenbestrahlung (2,45 GHz). Danach wird der Katheter entnommen, und das Lumen werden 2 h mit entmineralisiertem Wasser von 60°C durchspült.

### Beispiel 3 - Variante A / Thermisch initiierte Pfropfung

Es werden 0.5 g Azoisobutyronitril in 58 g Acrylsäure, 2 g Natriumstyrolsulfonat und 39,5 g Wasser gelöst. Diese Mischung wird auf 35°C erwärmt und für 10 sec durch das Lumen eines handelsüblichen Katheters aus Polyurethan (TECOFLEX^{(R)} der Fa. THERMEDIX GmbH, Heidelberg) geleitet (Durchflußrate 0,2 ml/sec). Unmittelbar danach wird 5 sec lang entmineralisiertes Wasser von 25°C durch das Lumen des.Katheters geleitet. Danach wird das Lumen mit Stickstoff freigeblasen. Der Katheter wird nach Beendigung der Vorbehandlung in einen Mikrowellenofen gehängt, dessen Innenraum mit Schutzgas (Stickstoff oder Argon) gefüllt ist. Die Pfropfung erfolgt durch 5-minütige Mikrowellenbestrahlung (2,45 GHz). Danach wird der Katheter entnommen, und die Lumen werden 2 h mit entmineralisiertem Wasser von 60°C durchspült.

## Patentansprüche

1. Verfahren zur Modifizierung der Oberfläche von Polymersubstraten mittels durch elektromagnetische Strahlung oder thermisch induzierter Pfropfpolymerisation mindestens eines olefinisch ungesättigten Monomers,
dadurch gekennzeichnet,
dass das Polymersubstrat vor der Pfropfung mit einem Photoinitiator oder einem Thermoinitiator und dem mindestens einen olefinisch ungesättigten Monomer vorbehandelt wird und nach dieser Vorbehandlung an der Oberfläche des Polymersubstrats haftende Monomere und Initiator entfernt werden.

2. Verfahren nach Anspruch 1,
dadurch gekennzeichnet,
dass die Pfropfung unmittelbar nach der Vorbehandlung und der Entfernung der an der Oberfläche haftenden Monomere und Initiator erfolgt und nur das zur Vorbehandlung eingesetzte Monomer pfropfpolymerisiert wird.

3. Verfahren nach Anspruch 1,
dadurch gekennzeichnet,
dass auf das vorbehandelte Polymersubstrat mindestens ein weiteres Monomer aufgebracht wird, das mit dem zur Vorbehandlung eingesetzten Monomer identisch oder von ihm verschieden sein kann, und dann das zur Vorbehandlung eingesetzte sowie das nachträglich aufgebrachte Monomer gemeinsam pfropfpolymerisiert werden.

4. Verfahren nach einem der Ansprüche 1 bis 3,
dadurch gekennzeichnet,
dass das Polymersubstrat aus einem Polyamid, Polyurethan, Polyetherblockamid, Polyesteramid oder -imid, PVC, Polysiloxan, Polymethacrylat oder Polyterephthalat besteht.

5. Verfahren nach einem der Ansprüche 1 bis 4,
dadurch gekennzeichnet,
dass das mindestens eine Monomer für die Vorbehandlung und gegebenenfalls das mindestens eine weitere aufgebrachte Monomer gleich oder verschieden und Acryl- oder Methacrylverbindungen der allgemeinen Formel
H₂C =CR₁ -COOR₂
oder Acrylamide und Methacrylamide der allgemeinen Formel
H₂C=CR₁ -CONR₂R₃,
sind, wobei
R₁ ein Wasserstoffatom oder eine Methylgruppe bedeutet und R₂ und R₃ geich oder verschieden sein können und jeweils ein Wasserstoffatom, ein Metallatom oder einen verzweigten oder unverzweigten aliphatischen, cycloaliphatischen, heterocyclischen oder aromatischen Kohlenwasserstoffrest mit bis zu 20 Kohlenstoffatomen oder einen solchen Kohlenwasserstoffrest, der durch Carboxylgruppen, Carboxylatgruppen, Sulfonatgruppen, Alkylaminogruppen, Alkoxygruppen, Halogene, Hydroxygruppen, Aminogruppen, Dialkylaminogruppen, Phosphatgruppen, Phosphonatgruppen, Sulfatgruppen, Carboxamidogruppen, Sulfonamidogruppen, Phosphonamidogruppen oder Kombinationen dieser Gruppen derivatisiert ist, bezeichnen.

6. Verfahren nach einem der Ansprüche 1 bis 4,
dadurch gekennzeichnet,
dass das mindestens eine Monomer für die Vorbehandlung und gegebenenfalls das mindestens eine weitere aufgebrachte Monomer gleich oder verschieden und Vinylverbindungen der allgemeinen Formeln
R₄CH=CHR₅
oder
H₂C-CH-COOR₄
oder Malein- und Fumarsäurederivate der allgemeinen Formel
R₄OOC-HC=CH-COOR₄
sind, wobei die Substituenten
R₄ gleich oder verschieden sein können und jeweils ein Wasserstoffatom, einen aromatischen Rest oder eine Methylgruppe bezeichnen oder die gleiche Bedeutung wie R₂ in Anspruch 5 haben und
R₅ für ein Wasserstoffatom, eine Methylgruppe oder eine Hydroxylgruppe steht, dieselbe Bedeutung wie R₂ hat oder eine Ethergruppe der Formel -OR₂, in der R₂ wie in Anspruch 5 definiert ist, bezeichnet.

7. Verfahren nach einem der Ansprüche 1 bis 6,
dadurch gekennzeichnet,
dass die Monomere Carboxyl- oder Carboxylatgruppen, Sulfonatgruppen, Hydroxylgruppen, Amino- oder Ammoniumgruppen und/oder Phosphatgruppen enthaltende Monomere sind.

8. Verfahren nach einem der Ansprüche 1 bis 7,
dadurch gekennzeichnet,
dass man Monomere mit zwei olefinischen Doppelbindungen der allgemeinen Formel
CH₂=CR¹-R⁶-CR¹=CH₂
in der R⁶ einen zweiwertigen organischen Rest bezeichnet und R¹ die in Anspruch 5 angegebene Bedeutung hat, in Verbindung mit monoolefinischen Monomeren einsetzt, wodurch vernetzte Pfropfcopolymere entstehen.

9. Verfahren nach einem der Ansprüche 1 bis 8,
dadurch gekennzeichnet,
dass man das Polymersubstrat mit einer Mischung vorbehandelt, die zumindest im Wesentlichen aus dem Photoinitiator oder dem Thermoinitiator sowie mindestens einem Monomer besteht.

10. Verfahren nach Anspruch 9,
dadurch gekennzeichnet,
dass die Mischung bis zu 80 Gewichtsprozent, bezogen auf die Mischung eines inerten Lösemittels enthält.

11. Verfahren nach einem der Ansprüche 1 bis 10,
dadurch gekennzeichnet,
dass als Photoinitiator ein Benzoin, Benzoinderivat, Benzilketal oder α-Hydroxyketon verwendet wird.

12. Verfahren nach einem der Ansprüche 1 bis 10,
dadurch gekennzeichnet,
dass als Thermoinitiator eine Azoverbindung oder eine Peroxoverbindung verwendet wird.

13. Verfahren nach einem der Ansprüche 1 oder 3 bis 13,
dadurch gekennzeichnet,
dass das vorbehandelte Substrat bei der Pfropfpolymerisation in Kontakt mit mindestens einem weiteren flüssigen Monomer oder mit einer Lösung mindestens eines weiteren Monomers ist.

14. Verfahren nach Anspruch 13,
dadurch gekennzeichnet,
dass das vorbehandelte Polymersubstrat bei der Pfropfpolymerisation in das flüssige Monomer oder eine Lösung des flüssigen Monomers getaucht ist.

15. Verfahren nach Anspruch 13,
dadurch gekennzeichnet,
dass das vorbehandelte Polymersubstrat bei der Pfropfpolymerisation mit dem flüssigen Monomer oder einer Lösung des flüssigen Monomers beschichtet ist.

16. Verfahren nach einem der Ansprüche 1 bis 11 oder 13 bis 15,
dadurch gekennzeichnet,
dass die Wellenlänge der elektromagnetischen Strahlung 200 bis 400 nm beträgt.

17. Verfahren nach einem der Ansprüche 1 bis 10 oder 12 bis 15,
dadurch gekennzeichnet,
dass die Pfropfung bei einer Temperatur von 50 bis 150 °C initiiert wird.

18. Verfahren nach Anspruch 17,
dadurch gekennzeichnet,
dass die Pfropfung durch Infrarot- oder Mikrowellenstrahlung initiiert wird.

19. Verfahren nach einem der Ansprüche 1 bis 18,
dadurch gekennzeichnet,
dass die an der Oberfläche des Polymersubstrats haftenden Monomere und Initiator durch Eintauchen oder Abspülen des Polymersubstrats mit einem Lösemittel entfernt werden.

20. Verwendung der gemäß den Ansprüche 1 bis 19 modifizierten Polymersubstrate zur Herstellung von medizintechnischen Erzeugnissen.

21. Verwendung der gemäß den Ansprüche 1 bis 19 modifizierten Polymersubstrate zur Herstellung von Hygieneerzeugnissen.

22. Medizintechnische Erzeugnisse, die ein gemäß dem Verfahren nach einem der Ansprüche 1 bis 19 modifiziertes Polymersubstrat enthalten oder daraus bestehen.

23. Hygieneerzeugnisse, die ein gemäß dem Verfahren nach einem der Ansprüche 1 bis 19 modifiziertes Polymersubstrat enthalten oder daraus bestehen.

## Claims

1. A process for modifying the surface of polymer substrates using graft polymerization, initiated by electromagnetic radiation or thermally, of at least one olefinically unsaturated monomer, characterized in that the polymer substrate is pretreated, before the grafting, with a photoinitiator or thermoinitiator and the at least one olefinically unsaturated monomer and, after this pretreatment, monomers and initiator adhering to the surface of the polymer substrate are removed.

2. A process according to claim 1, characterized in that the grafting is carried out immediately after the pretreatment and the removal of monomers and initiator adhering to the surface, and only the monomer employed for the pretreatment is graft-polymerized.

3. A process according to claim 1, characterised in that at least one further monomer, which may be identical with or different from the monomer employed for the pretreatment, is applied to the pretreated polymer substrate, and the monomer employed for the pretreatment and the monomer applied subsequently are then graft-polymerized together.

4. A process according to any one of claims 1 to 3, characterized in that the polymer substrate comprises a polyamide, polyurethane, polyether block amide, polyester amide, polyester imide, PVC, polysiloxane, polymethacrylate or polyterephthalate.

5. A process according to any one of claims 1 to 4, characterized in that the at least one monomer for the pretreatment and, if desired, the at least one further applied monomer are identical or different and are acrylic or methacrylic compounds of the general formula
H₂C=CR₁-COOR₂
or acrylamides and methacrylamides of the general formula
H₂C=CR₁-CONR₂R₃
where R₁ is a hydrogen atom or a methyl group and
R₂ and R₃ are identical or different and are each a hydrogen atom, a metal atom or a branched or unbranched aliphatic, cycloaliphatic, heterocyclic or aromatic hydrocarbon radical having up to 20 carbon atoms or such a hydrocarbon radical derivatized by carboxyl, carboxylate, sulphonate, alkylamino or alkoxy groups, halogen, hydroxyl, amino, dialkylamino, phosphate, phosphonate, sulphate, carboxamido, sulphonamido or phosphonamido groups or combinations of these groups.

6. A process according to any one of claims 1 to 4, characterized in that the at least one monomer for the pretreatment and, if desired, the at least one further applied monomer are identical or different and are vinyl compounds of the general formulae
R₄CH=CHR₅
or
H₂C=CH-COOR₄
or derivatives of maleic and fumaric acid of the general formula
R₄OOC-CH=CH-COOR₄
where the substituents
R₄ are identical or different and are each a hydrogen atom, an aromatic radical or a methyl group or are the same as R₂ in claim 5 and
R₅ is a hydrogen atom, a methyl group or a hydroxyl group, or is the same as R₂ or is an ether group of the formula -OR₂, in which R₂ is as defined in claim 5.

7. A process according to any one of claims 1 to 6, characterised in that the monomers are monomers containing carboxyl or carboxylate, sulphonate, hydroxyl, amino or ammonium and/or phosphate groups.

8. A process according to any one of claims 1 to 7, characterised in that monomers which have two olefinic double bonds and have the general formula
CH₂=CR¹-R⁶-CR¹=CH₂
where R⁶ is a bivalent organic radical and R¹ is as stated in claim 5, are introduced, in conjunction with monoolefinic monomers, giving crosslinked graft copolymers.

9. A process according to any one of claims 1 to 8, characterized in that the polymer substrate is pretreated with a mixture at least essentially consisting of the photoinitiator or the thermoinitiator and at least one monomer.

10. A process according to claim 9, characterized in that the mixture contains up to 80 percent by weight, based on the mixture, of an inert solvent.

11. A process according to any one of claims 1 to 10, characterized in that a benzoin, a benzoin derivative, a benzil ketal or an α-hydroxyketone is used as photoinitiator.

12. A process according to any one of claims 1 to 10, characterized in that an azo compound or a peroxo compound is used as thermoinitiator.

13. A process according to any one of claims 1 or 3 to 12, characterized in that the pretreated substrate is in contact with at least one further liquid monomer or with a solution of at least one further monomer during the graft polymerization.

14. A process according to claim 13, characterised in that the pretreated polymer substrate is dipped into the liquid monomer or into a solution of the liquid monomer during the graft polymerization.

15. A process according to claim 13, characterised in that the pre-treated polymer substrate is coated with the liquid monomer or with a solution of the liquid monomer during the graft polymerization.

16. A process according to any one of claims 1 to 11 or 13 to 15, characterized in that the wavelength of the electromagnetic radiation is from 200 to 400 nm.

17. A process according to any one of claims 1 to 10 or 12 to 15, characterized in that the grafting is initiated at a temperature of from 50 to 150°C.

18. A process according to claim 17, characterized in that the grafting is initiated by infrared or microwave radiation.

19. A process according to any one of claims 1 to 18, characterized in that the monomers and initiator adhering to the surface of the polymer substrate are removed by dipping or rinsing the polymer substrate, using a solvent.

20. The use of the polymer subsrates modified according to any of claims 1 to 19 for producing medical products.

21. The use of the polymer substrates modified according to any of claims 1 to 19 for producing hygiene products.

22. A medical product which includes or consists of a polymer substrate modified according to the process of any one of claims 1 to 19.

23. A hygiene product which includes or consists of a polymer substrate modified according to the process of any one of claims 1 to 19.

## Revendications

1. Procédé de modification des surfaces de substrats polymères à l'aide de polymérisation par greffage induite par rayonnement électromagnétique ou thermiquement, d'au moins un monomère non saturé oléfiniquement,
caractérisé en ce que
le substrat polymère avant le greffage est prétraité avec un photoinitiateur ou un thermoinitiateur et avec celui au moins d'un monomère non saturé oléfiniquement, et après ce prétraitement sur les surfaces du substrat polymère on élimine les monomères adhérents et l'initiateur.

2. Procédé selon la revendication 1,
caractérisé en ce que
le greffage s'effectue immédiatement après le prétraitement et l'élimination des monomères adhérents à la surface et de l'initiateur, et seulement le monomère mis en oeuvre en vue du prétraitement est polymérisé par greffage.

3. Procédé selon la revendication 1,
caractérisé en ce que
sur le substrat polymère prétraité, on applique au moins un autre monomère qui peut être identique ou différent du monomère mis en oeuvre pour le prétraitement, et ensuite le monomère appliqué ultérieurement ainsi que celui du prétraitement sont polymérisés ensemble par greffage.

4. Procédé selon l'une quelconque des revendications 1 à 3,
caractérisé en ce que
le substrat polymère consiste en un polyamide, un polyuréthane, un amide en bloc de polyéther, un polyesteramide ou imide, un PVC, un polysiloxane, un polyméthacrylate ou un polytéréphtalate.

5. Procédé selon l'une quelconque des revendications 1 à 4,
caractérisé en ce que
le monomère au moins unique pour le prétraitement et éventuellement l'autre monomère au moins unique appliqué, sont identiques ou différents et sont des composés acryliques ou méthacryliques de formule générale :
H₂C=CR₁-COOR₂
ou des acrylamides et des méthacrylamides de formule générale :
H₂C=CR₁-CONR₂R₃,
dans lesquelles,
R₁ signifie un atome d'hydrogène ou un groupe méthyle, et R₂ et R₃ peuvent être identiques ou différents et respectivement désignent un atome d'hydrogène, un atome métallique ou un reste hydrocarboné, ramifié ou non ramifié, aliphatique, cycloaliphatique, hétérocyclique ou aromatique ayant jusqu'à 20 atomes de carbone, ou un tel reste hydrocarboné qui est converti en dérivé à l'aide de groupes carboxyle, de groupes carboxylate, de groupes sulfonates, de groupes alkylamine, de groupes alkoxy, halogène, de groupes hydroxy, de groupes amino, de groupes dialkylamino, de groupes phosphate, de groupes phosphonates, de groupes sulfate, de groupes carboxamido, de groupes sulfonamido, de groupes phosphonamido ou des combinaisons de ces groupes.

6. Procédé selon l'une quelconque des revendications 1 à 4,
caractérisé en ce que
le monomère au moins unique pour le prétraitement et éventuellement l'autre monomère au moins unique appliqué, sont identiques ou différents, et sont des composés vinyliques de formule générale :
R₄CH=CHR₅
ou
H₂C=CH-COOR₄
ou des dérivés d'acide maléique et fumarique de formule générale :
R₄OOC-HC=CH-COOR₄
dans lesquelles,
les substituants R₄ peuvent être identiques ou différents et désigner chaque fois un atome d'hydrogène, un radical aromatique ou un groupe méthyle, ou ont la même signification que R₂ dans la revendication 5, et
R₅ représente un atome d'hydrogène, un groupe méthyle, ou un groupe hydroxyle, a la même signification que R₂ ou un groupe éther de la formule -OR₂ dans laquelle R₂ est défini comme à la revendication 5.

7. Procédé selon l'une quelconque des revendications 1 à 6,
caractérisé en ce que
les monomères sont des monomères qui contiennent des groupes carboxyle ou carboxylate, des groupes sulfonate, des groupes hydroxyle, des groupes amino ou des groupes hydroxyle, des groupes amino ou ammonium et/ou des groupes phosphate;

8. procédé selon l'une quelconque des revendications 1 à 7,
caractérisé en ce qu'
on met en oeuvre des monomères ayant deux double liaisons oléfiniques de formule générale :
CH₂=CR¹-R⁶-CR¹=CH₂
dans laquelle R⁶ désigne un reste organique bifonctionnel et R¹ a la signification indiquée à la revendication 5, en liaison avec des monomères mono-oléfiniques pour former des copolymères greffés, réticulés.

9. Procédé selon l'une quelconque des revendications 1 à 8,
caractérisé en ce qu'
on prétraite le substrat polymère avec un mélange, constitué au moins essentiellement du photoinitiateur ou de l'initiateur thermique ainsi qu'au moins d'un monomère.

10. Procédé selon la revendication 9,
caractérisé en ce que
le mélange renferme jusqu'à 80 pour-cent en poids d'un solvant inerte rapporté au mélange.

11. Procédé selon l'une quelconque des revendications 1 à 10,
caractérisé en ce que
comme photoinitiateur on utilise une benzoïne, un dérivé de benzoïne, le cétal de benzile, ou une α-hydroxycétone.

12. Procédé selon l'une quelconque des revendications 1 à 10,
caractérisé en ce qu'
on utilise comme thermoinitiateur un composé azo ou un composé peroxo.

13. Procédé selon l'une quelconque des revendications 1 ou 3 à 12,
caractérisé en ce que
le substrat prétraité au cours de la polymérisation par greffage est en contact avec au moins un autre monomère liquide ou une solution d'au moins un autre monomère.

14. Procédé selon la revendication 13,
caractérisé en ce que
le substrat polymère prétraité est plongé au cours de la polymérisation par greffage dans le monomère liquide ou dans une solution du monomère liquide.

15. Procédé selon la revendication 13,
caractérisé en ce que
le substrat polymère prétraité est recouvert au cours de la polymérisation par greffage avec le monomère liquide ou une solution du monomère liquide.

16. Procédé selon l'une quelconque des revendications 1 à 11, ou 13 à 15,
caractérisé en ce que
la longueur d'onde du rayonnement électromagnétique est de 200 à 400 nm.

17. Procédé selon l'une quelconque des revendications 1 à 10, ou 12 à 15,
caractérisé en ce que
le greffage est mis en route à une température de 50 à 150°C.

18. Procédé selon la revendication 17,
caractérisé en ce que
le greffage est mis en route par rayonnement infrarouge ou par micro-ondes.

19. Procédé selon l'une quelconque des revendications 1 à 18,
caractérisé en ce que
les monomères adhérents à la surface du substrat de polymère et l'initiateur sont éliminés par immersion ou lavage du substrat polymère avec un solvant.

20. Utilisation des substrats polymères modifiés selon les revendications 1 à 19, en vue de la production de produits industriels en médecine.

21. Utilisation des substrats polymères modifiés selon les revendications 1 à 19, en vue de la production de produits d'hygiène.

22. Produits de technique médicale qui renferment un substrat polymère modifié conformément au procédé selon l'une quelconque des revendications 1 à 19 ou qui consistent en cela.

23. Produits d'hygiène qui renferment un substrat polymère modifié conformément au procédé selon l'une quelconque des revendications 1 à 19 ou qui consistent en cela.
